# EUROPÄISCHE PATENTSCHRIFT

(11) **EP 2 734 756 B1**
(45) Veröffentlichungstag und Bekanntmachung des Hinweises auf die Patenterteilung: **23.01.2019**
(21) Anmeldenummer: 12737223.3
(22) Anmeldetag: 19.07.2012
(51) Int. Cl.: F16K 1/00, F16K 31/122

(54) **VENTILMODUL**
VALVE MODULE
MODULE DE SOUPAPE

(30) Priorität: 22.07.2011 DE 102011108177
(43) Veröffentlichungstag der Anmeldung: 28.05.2014
(73) Patentinhaber: Festo AG & Co. KG, 73734 Esslingen (DE)
(72) Erfinder: MAICHL, Martin, 73084 Salach (DE); WIRTL, Hannes, 86956 Schongau (DE); DICKHOFF, Andreas, 73230 Kirchheim (DE)
(74) Vertreter: Patentanwälte Magenbauer & Kollegen Partnerschaft mbB
(86) Internationale Anmeldenummer: PCT/EP2012/003052
(87) Internationale Veröffentlichungsnummer: WO 2013/013797

(56) Entgegenhaltungen:
- EP-A2- 2 308 602
- WO-A1-88/01705
- WO-A2-2007/118674
- DE-U1- 7 734 368
- GB-A- 2 376 735

## Beschreibung

Die Erfindung betrifft ein Verfahren zur Herstellung eines Ventilmoduls, das zur Beeinflussung einer Fluidversorgung eines fluidisch betreibbaren Verbrauchers ausgebildet ist und das beispielhaft ein Ventilgehäuse mit einem Ventilraum und mit einer fluidisch kommunizierenden Verbindung zu einem Eingangsanschluss und einem Ausgangsanschluss sowie ein beweglich im Ventilraum aufgenommenes Ventilglied aufweist, wobei das Ventilglied längs einer Bewegungsachse zwischen einer Blockierstellung und einer Freigabestellung einstellbar ist, um einen freien Strömungsquerschnitt zwischen dem Eingangsanschluss und dem Ausgangsanschluss zu beeinflussen, wobei das Ventilmodul eine Federeinrichtung zur Bereitstellung einer vorgebbaren Vorspannkraft auf das Ventilgliedumfasst, um eine Vorzugsstellung des Ventilglieds im Ventilraum zu bestimmen, wobei die Federeinrichtung mit einem dem Ventilglied abgewandten Endbereich an einem Stützmittel abgestützt ist.

Aus der Druckschrift WO 88/01705 A1 ist eine Einstelleinrichtung zur Veränderung einer Federvorspannung eines Fluidventils bekannt, die eine Einstellschraube umfasst.

Die GB 2 376 735 A offenbart eine Endkappe für ein Fluidventil, die mit einem Gewinde an einem Ventilgehäuse verstellbar angebracht ist und an der eine Rückstellfeder für einen Ventilkörper des Fluidventils abgestützt ist.

Die EP 2 308 602 A2 offenbart einen mit einem Außengewinde versehenen Kolbenstopfen zur Einstellung einer Federvorspannung einer Druckfeder, die als Rückstellfeder für einen Ventilkörper ausgebildet ist.

Aus der DE 77 34 368 ist eine Schraubverstellung zur Justierung des Schaltverhaltens des Ventilglieds bekannt.

Die WO 2007/118674 A2 offenbart ein druckentlastetes Schaltventil mit einem längsbeweglichen Ventilkolben, einer ortsfesten Magnetspule und einem längsbeweglichen Anker, der mit dem längsbeweglichen Ventilkolben zusammenarbeitet, jedoch keine feste Verbindung mit diesem aufweist.

Die Aufgabe der Erfindung besteht darin, ein Verfahren zur Herstellung eines Ventilmoduls bereitzustellen, das eine kostengünstige Herstellung eines Ventilmoduls mit eng tolerierbarem Schaltverhalten ermöglicht.

Diese Aufgabe wird mit den Merkmalen des Anspruchs 1 gelöst.

Exemplarisch ist vorgesehen, dass das Stützmittel in einer Ausnehmung des Ventilgehäuses oder eines im Ventilgehäuse anbringbaren Ventileinsatzes schiebebeweglich angeordnet ist und innerhalb eines Einstellbereichs in einer frei wählbaren Justierposition relativ zum Ventilgehäuse festlegbar ist, wobei das Ventilglied schiebebeweglich in einer Ausnehmung des Stützmittels aufgenommen ist.

Hierdurch wird die gewünschte freie Einstellbarkeit des Stützmittels gegenüber dem Ventilgehäuse oder dem Ventileinsatz sichergestellt. Zudem sind das Ventilglied und die Ausnehmung im Stützmittel vorzugsweise derart aneinander angepasst, dass in Richtungen quer zur Bewegungsachse kein oder nur ein geringfügiges Bewegungsspiel vorliegt, so dass das Ventilglied durch das Stützmittel in vorteilhafter Weise abgestützt und geführt wird. Dies ist insbesondere im Hinblick auf die von der Federeinrichtung auf das Ventilglied ausgeübte Vorspannkraft und im Hinblick auf eine gewünschte hohe Bewegungsdynamik für das Ventilglied zum Erreichen möglichst kurzer Schaltzeiten von Vorteil. Besonders bevorzugt bildet das Stützmittel für das Ventilglied eine Gleitführung.

Durch die Einstellung der Justierposition für das Stützelement wird eine Vorspannung oder innere Spannung der Federeinrichtung festgelegt, die ihrerseits einen direkten Einfluss auf das Schaltverhalten des Ventilglieds hat. Das Ventilglied kann wahlweise durch einen elektromechanischen oder einen fluidischen Aktor, beispielsweise mittels einer Magnetspule oder mittels fluidischer Ansteuerung, insbesondere mit Hilfe eines als fluidischer Zylinder ausgebildeten Stellmittels, bewegt werden. Diese Bewegung ist zumindest im Wesentlichen von einer vom Aktor bereitgestellten Stellkraft, von einer der Stellkraft entgegengesetzten Federkraft der Federeinrichtung und von Reibungskräften bei der Bewegung Ventilglieds längs der Bewegungsachse abhängig. Durch die freie Einstellbarkeit des Stützmittels können Toleranzen, wie sie bei der Herstellung der einzelnen Komponenten, insbesondere des Ventilgehäuses, des Ventilglieds, der Federeinrichtung, auftreten, zumindest weitgehend ausgeglichen werden, um ein vorgebbares Schaltverhalten für das Ventilglied in Abhängigkeit von der Stellkraft zu erreichen.

Zweckmäßig ist es, wenn das Stützmittel für eine endseitige Abdichtung des Ventilraums ausgebildet ist. Hierdurch kommt dem Stützmittel eine vorteilhafte Doppelfunktion zu, da es über die Abstützung der Federeinrichtung hinaus auch den Ventilraum endseitig begrenzt. Dadurch wird eine einfache und kostengünstige Aufbauweise der Ventileinrichtung begünstigt.

Bevorzugt ist das Stützmittel zur Festlegung der Justierposition mit dem Ventilgehäuse und/oder einem Ventileinsatz stoffschlüssig verbindbar. Mit der stoffschlüssigen Verbindung zwischen Stützmittel und Ventilgehäuse und/oder Ventileinsatz wird eine zuverlässige Festlegung des Stützmittels in der Justierposition erreicht. Zudem kann auf fertigungstechnisch aufwendige Bearbeitungsvorgänge wie beispielsweise Gewindeschneiden verzichtet werden, die üblicherweise eingesetzt werden, um eine einstellbare Relativposition zwischen zwei Komponenten zu ermöglichen. Für die Herstellung der stoffschlüssigen Verbindung können insbesondere Klebeverfahren und/oder Lötverfahren und/oder Schweißverfahren, vorzugsweise Laserschweißen, eingesetzt werden.

In weiterer Ausgestaltung des Ventilmoduls ist eine Mittelachse der Federeinrichtung parallel zur Bewegungsachse des Ventilglieds ausgerichtet. Hierdurch wird eine vorteilhafte Ausnutzung der in der Federeinrichtung speicherbaren Federenergie zur Vorgabe einer Vorzugsposition für das Ventilglied erreicht. Dies ist insbesondere dann der Fall, wenn die Federeinrichtung als Wendelfeder ausgebildet ist.

Insbesondere kann es zweckmäßig sein, wenn das Ventilglied zusammen mit dem Stützmittel einen, insbesondere abgedichtet ausgebildeten, Aufnahmeraum für die Federeinrichtung begrenzt. Hierdurch wird eine kompakte Anordnung der Federeinrichtung ermöglicht. Bei einer druckdichten Ausführung des Aufnahmeraums kann dieser aufgrund des darin einschliessbaren Fluidvolumens, insbesondere Luftvolumens, zusätzlich als fluidische Feder dienen, die damit ebenfalls Teil der Federeinrichtung ist. Dies kann ausgenutzt werden, in dem die vorzugweise vorzusehende Wendelfeder kleiner dimensioniert wird.

Erfindungsgemäß wird die Aufgabe der Erfindung mit einem Verfahren gemäß Anspruch 1 gelöst. Hierbei sind die nachfolgenden Schritte vorgesehen: Einsetzen des Ventilglieds in den Ventilraum, Einschieben des Stützmittels und der daran abgestützten Federeinrichtung in das Ventilgehäuse, Einstellen einer relativen Lage des Stützmittels gegenüber dem Ventilgehäuse, bis bei einem vorgebbaren Prüfdruck und/oder bei einer vorgebbaren Prüfkraft auf das Ventilglied ein vorgebbarer Fluidvolumenstrom durch den Ventilraum strömen kann und/oder eine vorgebbare Position des Ventilglieds gegenüber dem Ventilgehäuse und/oder dem Ventileinsatz eingestellt ist, stoffschlüssiges Festlegen des Stützmittels am Ventilgehäuse und/oder am Ventileinsatz. Vorteilhaft bei dieser Vorgehensweise ist es, dass zumindest die für das Schaltverhalten der Ventileinrichtung relevanten Komponenten, also das Ventilglied, die Federeinrichtung und je nach Aufbauweise das Ventilgehäuse oder ein zu einem späteren Zeitpunkt in das Ventilgehäuse zu montierender Ventileinsatz, in dem der Ventilsitz ausgebildet ist, zusammen mit dem Stützmittel zu einer Baugruppe vormontiert werden. In einem nachfolgenden Schritt findet eine Funktionsprüfung der Baugruppe statt, bei der das Schaltverhalten des Ventilglieds in Abhängigkeit von der Einwirkung von äußeren Kräften geprüft und eingestellt wird. Hierzu wird das Ventilglied mit einer mechanischen oder fluidischen Druckkraft beaufschlagt und das Öffnen oder Schließen des freien Strömungsquerschnitts zwischen Ventilglied und Ventilsitz im Druckdaum ermittelt. Je nach ermitteltem Schaltverhalten kann dann in einem nachgelagerten Schritt entweder im Fall eines nicht den Vorgaben entsprechenden Schaltverhaltens eine Justierung des Schaltverhaltens durch Erhöhen oder Reduzieren der von der Federeinrichtung aufgebrachten Vorspannung auf das Ventilglied oder im Fall eines korrekten Schaltverhaltens eine Festlegung des Stützmittels am Ventileinsatz und/oder am Ventilgehäuse erfolgen. Die Justierung der Vorspannkraft erfolgt durch Verschieben des Stützmittels längs der Bewegungsachse, um eine Erhöhung oder Reduzierung der Kompression und damit der in der Federeinrichtung gespeicherten Vorspannkraft zu erreichen. In diesem Fall erfolgt anschließend eine neuerliche Prüfung des Schaltverhaltens der Ventileinrichtung, bis das vorgegebene korrekte Schaltverhalten eingestellt werden kann. Die Festlegung des Stützmittels am Ventileinsatz und/oder Ventilgehäuse erfolgt vorzugsweise stoffschlüssig, insbesondere durch Laserschweißen.

Eine vorteilhafte Ausführungsform eines Ventilmoduls ist in der Zeichnung dargestellt. Hierbei zeigt:
- Figur 1: eine Schnittdarstellung eines Ventilmoduls und

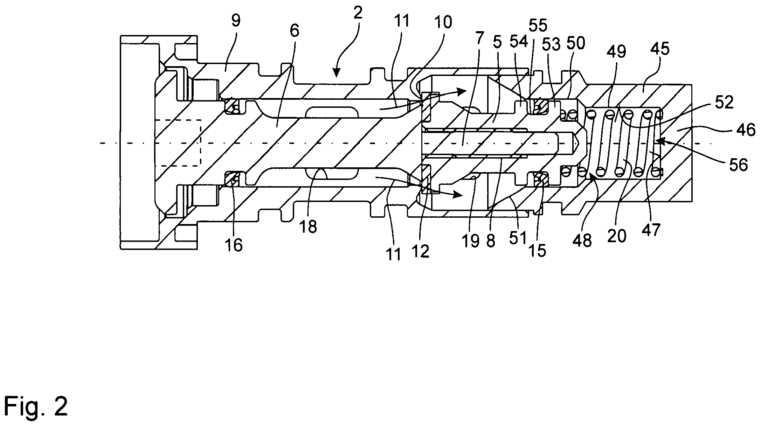

- Figur 2: eine Baugruppe des Ventilmoduls gemäß der Figur 1.

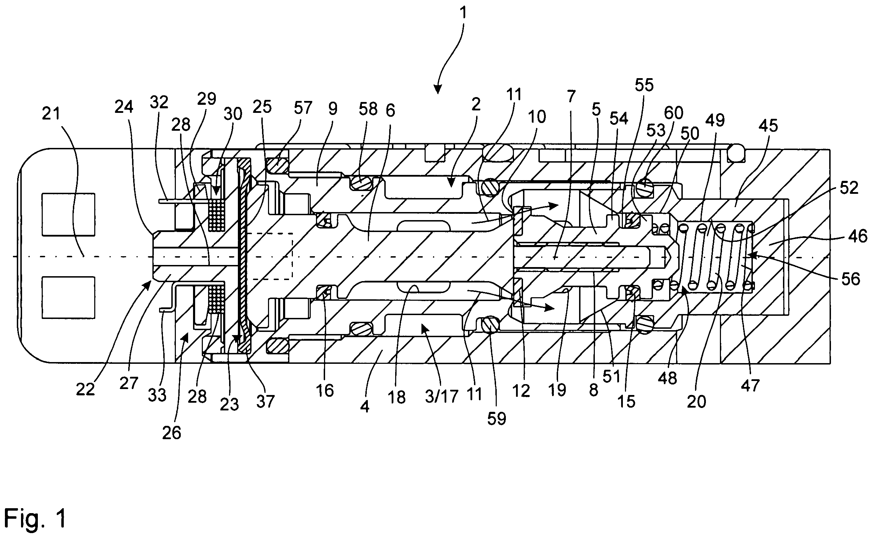

Eine Schnittdarstellung eines Ventilmoduls 1 gemäß der Figur 1 zeigt einen exemplarisch zweiteilig ausgebildeten Ventilkörper 2, der schiebebeweglich in einer Ventilausnehmung 3 eines Ventilgehäuses 4 aufgenommen ist. Der Ventilkörper 2 umfasst ein Ventilglied 5 und ein Stellglied 6, die fest miteinander verbunden sind. Hierzu sind am Stellglied 6 ein Gewindeabschnitt 7 und im Ventilglied 5 ein korrespondierendes Gewindesackloch 8 ausgebildet. Der Ventilkörper 2 ist schiebebeweglich in einem Ventileinsatz 9 geführt, der seinerseits in der Ventilausnehmung 3 festgelegt ist und der einen ringförmigen Ventilsitz 10 umfasst. Da der Ventilkörper 2 für die Beeinflussung eines freien Strömungsquerschnitts durch einen vom Ventilsitz 10 berandeten Strömungskanal 11 dient, ist zwischen dem Ventilglied 5 und dem Stellglied 6 eine ringförmig umlaufende Dichtscheibe 12 angeordnet, die in der Ruhestellung gemäß der Figur 1 für eine abdichtende und damit den Strömungskanal 11 blockierende Anlage am Ventilsitz 10 ausgebildet ist.

Sowohl das Ventilglied 5 als auch das Stellglied 6 sind exemplarisch gegenüber dem Ventileinsatz 9 jeweils mit einem Lippendichtring 15, 16 abgedichtet und begrenzen somit zusammen mit dem Ventileinsatz 9 und dem Ventilgehäuse 4 einen Druckraum 17. Der Druckraum 17 steht über eine erste Ausnehmung 18 mit einem ersten, nicht näher dargestellten Versorgungskanal in fluidisch kommunizierender Verbindung. Zudem steht der Druckraum 17 über eine zweite Ausnehmung 19 mit einem ebenfalls nicht näher dargestellten Ausgangskanal in fluidisch kommunizierender Verbindung. Durch die Wechselwirkung zwischen Ventilglied 5 und Ventilsitz 10 kann eine fluidisch kommunizierende Verbindung zwischen der ersten Ausnehmung 83 und der zweiten Ausnehmung 19 längs des Strömungskanals 11 wahlweise freigegeben oder blockiert werden.

Dem Ventilglied 5 ist an einem dem Stellglied 6 abgewandten Endbereich eine Druckfeder 20 zugeordnet, die in der dargestellten Ruhestellung des Ventilmoduls 1 eine Blockierung des Strömungskanals 11 vorgibt. Für eine Freigabe des Strömungskanals 11 ist eine translatorische Relativbewegung des Ventilglieds 5 und des damit gekoppelten Stellglieds 6 längs der Mittelachse 21 des Ventilmoduls 1 erforderlich. Hierbei muss die Rückstellkraft der Druckfeder 20 überwunden werden. Hierzu ist das Stellglied 6 in einer durch den Ventileinsatz9 und eine Abschlussplatte 22 bestimmten Vorsteuerkammer 23 aufgenommen. In der Abschlussplatte 21 ist ein Arbeitskanal 24 ausgebildet, durch den eine Fluidzufuhr und Fluidabfuhr in die bzw. aus der Vorsteuerkammer 23 erfolgen kann. Für eine vorteilhafte Abdichtung zwischen dem Druckraum 17 und der Vorsteuerkammer 23 ist zwischen dem Ventileinsatz 9 und der Abschlussplatte 22 eine Dichtmembran 25 eingefügt. Somit wird bei einer Druckbeaufschlagung der Vorsteuerkammer 23 eine Auslenkung des Stellglieds 6 und des damit gekoppelten Ventilglieds 5 bewirkt, wodurch die Dichtscheibe 12 vom Ventilsitz 10 abgehoben wird und der Strömungskanal 11 durch den Druckraum 17 freigegeben wird. Das hierzu benötigte druckbeaufschlagte Fluid wird beispielsweise von einem nicht dargestellten Vorsteuerventil an den Arbeitsanschluss 24 des Ventilmoduls 1 bereitgestellt.

Die Abschlussplatte 22 ist exemplarisch zumindest im Wesentlichen rotationssymmetrisch zur Mittelachse 21 ausgebildet und umfasst einen Anschlussstutzen 27, der von einem Arbeitskanal 28 durchsetzt ist. Der Arbeitskanal 28 ist für eine fluidisch kommunizierende Verbindung zwischen der Vorsteuerkammer 23 und dem Arbeitsanschluss 24 ausgebildet und exemplarisch als gerade Bohrung mit zylindrischem Querschnitt ausgebildet. Am Anschlussstutzen 27 ist einen umlaufend ausgebildeter Stützring 29 angebracht, der zusammen mit der Abschlussplatte 22 eine Ringnut bestimmt, in der die Spulenanordnung 30 aufgenommen ist. Dabei bildet der Anschlussstutzen 27 den Wickelkern für Spulenwindungen 31 der Spulenanordnung 30, die ihrerseits Teil einer Sensoreinrichtung 26 ist.

Die Spulenwindungen 31 werden durch Aufwickeln eines isolierten Drahtstücks auf den Anschlussstutzen 27 gebildet. Schematisch dargestellte Drahtenden 32, 33 der Spulenanordnung 30 sind mit einer Wechselstromquelle 34 und einer in Reihe zur Wechselstromquelle 34 geschalteten Strommesseinrichtung 35 verbunden, die ebenfalls Teil der Sensoreinrichtung 26 sind. Die Platzierung der Spulenanordnung 30 konzentrisch zum Anschlussstutzen 27 ermöglicht einen geringen axialen Abstand zwischen der Spulenanordnung 30 und dem Ventilglied 5 sowie dem Stellglied 6. Zudem dient der Anschlussstutzen 27 als Wickelkern und stabilisiert die Spulenanordnung 30. Desweiteren wird der ohnehin vorzusehende freie Innendurchmesser der Spulenanordnung 30 als Durchgang für den Arbeitskanal 28 genutzt, wodurch eine besonders kompakte Bauweise für das Ventilmodul 1 mit integrierter Spulenanordnung 30 erreicht wird.

Die Dichtmembran 25, die zur Abtrennung des Arbeitsfluids, das in der Vorsteuerkammer 23 bereitgestellt wird, vom Prozessfluid, das den Druckraum 17 durchströmt, ist zwischen einem stirnseitigen Endbereich des Ventileinsatzes 9 und einer gegenüberliegend angeordneten Stirnfläche der Abschlussplatte 22 geklemmt. Für eine vorteilhafte Dichtwirkung der Dichtmembran 25 gegenüber den zugeordneten Stirnflächen von Ventileinsatz 9 und Abschlussplatte 22 ist an der Dichtmembran 25 eine umlaufende Wulst 37 vorgesehen, der nach der Montage der Abschlussplatte 22 an das Ventilgehäuse 4 in einem ringförmigen Bereich eine hohe Flächenpressung und damit eine vorteilhafte Dichtwirkung für die Dichtmembran 25 gewährleistet. Die Flächenpressung der Wulst 37 wird durch die Abschlussplatte 22 bereitgestellt, die ihrerseits von einer stirnseitig am Ventileinsatz 9, insbesondere stoffschlüssig, angebrachten Deckplatte 38 gehalten wird. Die Deckplatte 38 komprimiert mit einer der Abschlussplatte 22 zugewandten Innenfläche einen Dichtring 39, der seinerseits an einer der Deckplatte 38 zugewandten Oberfläche der Abschlussplatte 22 anliegt. Die Deckplatte 38 wird von den Drahtenden 32, 33 der Spulenanordnung 30 durchsetzt. Da die Spulenanordnung 30 nicht in einem druckbeaufschlagten Bereich angeordnet ist, kann auf eine Abdichtung der Durchführungen für die Drahtenden 32, 33 verzichtet werden.

Die Dichtmembran 25 ist derart ausgebildet, dass sie innerhalb des im Wesentlichen von der Geometrie des Ventilglieds 5 und des Ventileinsatzes 9 vorgegebenen Ventilhubs 40 lediglich elastisch deformiert wird.

Die mit einem ersten Endbereich am Ventilglied 5 anliegende Druckfeder 20 ist mit einem zweiten, dem Ventilglied 5 abgewandten Endbereich an einem Stützmittel 45 abgestützt. Das Stützmittel 45 ist exemplarisch als jeweils abschnittsweise zylindrische Hülse ausgebildet. Vorzugsweise ist das Stützmittel 45 rotationssymmetrisch zur Mittelachse 21 ausgebildet. An einem dem Ventilglied 5 abgewandten Endbereich ist das hülsenförmige Stützmittel 45 vorliegend mit einer Deckplatte 46 versehen, deren Innenfläche 47 als Anlagefläche für die Druckfeder 20 dient. Die Druckfeder 20 ist in einer gestuft ausgebildeten Ausnehmung 48 des Stützmittels 45 aufgenommen. Dabei ist ein der Deckplatte 46 benachbarter erster Teilabschnitt 49 der Ausnehmung 48 exemplarisch zylindrisch ausgebildet und weist einen Innendurchmesser auf, der derart auf einen Außendurchmesser der Druckfeder 20 angepasst, dass die Windungen der Druckfeder 20 sich frei bewegen können, sich jedoch nötigenfalls an der Innenwand 52 des ersten Teilabschnitts 49 abstützen können. An den ersten Teilabschnitt 49 grenzt ein zweiter Teilabschnitt 50 der Ausnehmung 48 an, der exemplarisch ebenfalls zylindrisch ausgebildet ist. Der zweite Teilabschnitt dient als Aufnahmeabschnitt, insbesondere in der Art eines Gleitlagers, für einen Endbereich des Ventilglieds 5. Das Ventilglied 5 ist hierbei exemplarisch für eine schiebebeweglich abgedichtete Lagerung im zweiten Teilabschnitt 50 ausgebildet und weist hierzu zwei jeweils umlaufend ausgebildete Bundstege 53, 54 auf. Die Bundstege 53, 54 sind in axialer Richtung längs der Mittelachse 21 beabstandet voneinander angeordnet und begrenzen damit eine umlaufende Nut 55. In der Nut 55 ist der Lippendichtring 15, der für eine radiale Abdichtung zwischen Ventilglied 5 und Stützmittel 45 ausgebildet ist, aufgenommen. Durch die abdichtende Aufnahme des Endbereichs des Ventilglieds 5 im Stützmittel 45 wird eine abgeschlossene Fluidkammer 56 gebildet, die bei Befüllung mit einem kompressiblen fluid, insbesondere Luft, als fluidische Feder zusätzlich zur Wirkung der Druckfeder 20 auf das Ventilglied 5 einwirkt. Zudem dienen die Bundstege 53, 54 in Zusammenwirkung mit dem zweiten Teilabschnitt 50 als mechanische Führung für das Ventilglied 5. An den zweiten Teilabschnitt 50 schließt sich ein dritter Teilabschnitt 51 an, der konusabschnittsförmig ausgebildet ist und insbesondere als Einführbereich für den Lippendichtring 15 bei der Montage des Stützmittels 45 auf den Endbereich des Ventilglieds 5 dient.

Bei der Montage des Ventilmoduls 1 wird zunächst das Stellglied 6 mit dem Lippendichtring 16 versehen und längs der Mittelachse 21 in den Ventileinsatz 9 eingeschoben. Anschließend wird die Dichtscheibe 12 auf den Gewindeabschnitt 7 des Stellglieds 6 aufgeschoben. In einem weiteren Montageschritt wird das mit dem Lippendichtring 5 versehene Ventilglied 5 mit seinem Gewindesackloch 8 auf den Gewindeabschnitt 7 des Stellglieds 6 aufgeschraubt, wobei die Dichtscheibe 12 zwischen einander gegenüberliegenden, ringförmigen Planflächenbereichen des Ventilglieds 5 und des Stellglieds 6 festgelegt wird. Abschließend wird das Stützmittel 45 mit der Druckfeder 20 versehen und derart auf das Ventilglied 5 aufgeschoben, dass die Bundstege 53, 54 und der dazwischen aufgenommene Lippendichtring 15 im zweiten Teilbereich 50 der Ausnehmung 48 zu liegen kommen.

Anschließend wird die soeben erstellte Baugruppe in eine nicht näher dargestellte Prüfeinrichtung aufgenommen, in der eine Kraft auf das Stellglied 6 eingeleitet werden kann, die der Vorspannkraft, wie sie von der Druckfeder 20 auf das Ventilglied 5 längs der Mittelachse 21 ausgeübt wird, entgegengesetzt ist. Vorzugsweise findet die Krafteinleitung auf das Stellglied 6 als mechanische Druckkrafteinleitung statt und es wird ein druckbeaufschlagtes Fluid über die Versorgungsausnehmung 18 bereitgestellt. In diesem Fall kann bei geeigneter Ausgestaltung der Prüfeinrichtung der Volumenstrom längs des Strömungskanals 11 von der Versorgungsausnehmung 18 hin zur Ausgangsausnehmung 19 und damit das Schaltverhalten des Ventilglieds 5 ermittelt werden. Im Zuge des Prüfvorgangs kann exemplarisch durch Erhöhung des Drucks auf das Stellglied 6 eine, vorzugsweise stetige, Kraftzunahme erreicht werden. Sobald die Kraft auf das Stellglied 6 größer als die Vorspannkraft der Druckfeder 20 ist, wird die mit dem Ventilglied 5 bewegungsgekoppelte Dichtscheibe 12 vom Ventilsitz 10 abgehoben und Fluid kann längs des Strömungskanals 11 strömen. Sofern zu diesem Zeitpunkt, der auch als Öffnungszeitpunkt bezeichnet werden kann, die Druckkraft auf das Stellglied 6 innerhalb eines vorgebbaren Intervalls liegt, kann das Stützmittel 45 am Ventileinsatz 9 festgelegt werden. Sofern die Druckkraft auf das Stellglied 6 außerhalb des vorgebbaren Intervalls liegt, wird das Stützmittel 45 bei zu hoher Druckkraft vom Ventilglied 5 um einen vorgebbaren Betrag längs der Mittelachse 21 entfernt, andernfalls wird das Stützmittel 45 längs der Mittelachse 21 um einen vorgebbaren Betrag an das Ventilglied 5 angenähert. Dieser Vorgang wird durchgeführt, bis die Druckkraft zum Schaltzeitpunkt im vorgegebenen Intervall liegt, um dann die Festlegung des Stützmittels 45 am Ventileinsatz 9 vorzunehmen.

In einem nachgelagerten Montageschritt kann nunmehr der Ventileinsatz 9 mit den darin aufgenommenen Komponenten mit Dichtringen 57, 58, 59, 60 versehen werden und in das Ventilgehäuse 4 eingeschoben werden. Dabei bildet der Ventileinsatz 9 zusammen mit dem darin aufgenommenen Stellglied 6 und den Dichtringen 58, 59 einen über die Ausnehmung 18 druckbeaufschlagbaren ersten Druckraum 17. Dieser Druckraum 17 ist bei Abheben der Dichtscheibe 12 vom Ventilsitz 10 fluidisch mit der Ausgangsausnehmung 19 gekoppelt, so dass druckbeaufschlagtes Fluid vom Druckraum 17 in die Ausgangsausnehmung 19 strömen kann.

## Patentansprüche

1. Verfahren zur Herstellung eines Ventilmoduls (1), das ein Ventilgehäuse (4) umfasst, das einen Ventilraum (17) mit einer fluidisch kommunizierenden Verbindung zu einem Eingangsanschluss (18) und einem Ausgangsanschluss (19) bestimmt, und das ein beweglich im Ventilraum (17) aufgenommenes Ventilglied (5) umfasst, das längs einer Bewegungsachse (21) zwischen einer Blockierstellung und einer Freigabestellung einstellbar ist, um einen freien Strömungsquerschnitt zwischen dem Eingangsanschluss (18) und dem Ausgangsanschluss (19) zu beeinflussen, und das eine Federeinrichtung (20) umfasst, die zur Bereitstellung einer vorgebbaren Vorspannkraft auf das Ventilglied (5) ausgebildet ist, um eine Vorzugsstellung des Ventilglieds (5) im Ventilraum (17) zu bestimmen, wobei die Federeinrichtung (20) mit einem dem Ventilglied (5) abgewandten Endbereich an einem Stützmittel (45) abgestützt ist, das in einer Ausnehmung des Ventilgehäuses (4) oder eines im Ventilgehäuse (4) anbringbaren Ventileinsatzes (9) schiebebeweglich angeordnet ist und innerhalb eines Einstellbereichs in einer frei wählbaren Justierposition relativ zum Ventilgehäuse (4) festlegbar ist, wobei das Ventilglied (5) schiebebeweglich in einer Ausnehmung (48, 49) des Stützmittels (45) aufgenommen ist, **gekennzeichnet durch** die Schritte: Einsetzen des Ventilglieds (5) in den Ventilraum (17), Einschieben des Stützmittels (45) und der daran abgestützten Federeinrichtung (20) in das Ventilgehäuse (4), Einstellen einer relativen Lage des Stützmittels (45) gegenüber dem Ventilgehäuse (4), bis bei einem vorgebbaren Prüfdruck und/oder bei einer vorgebbaren Prüfkraft auf das Ventilglied (5) ein vorgebbarer Fluidvolumenstrom durch den Ventilraum (17) strömen kann und/oder eine vorgebbare Position des Ventilglieds (5) gegenüber dem Ventilgehäuse (4) und/oder dem Ventileinsatz (9) eingestellt ist, stoffschlüssiges Festlegen des Stützmittels am Ventilgehäuse (4) und/oder am Ventileinsatz (9).

## Claims

1. Method for producing a valve module (1) comprising a valve housing (4) which defines a valve chamber (17) with a fluidically communicating connection to an inlet port (18) and an outlet port (19) and further comprising a valve member (5) which is movably accommodated in the valve chamber (17) and which is adjustable along a movement axis (21) between a blocking position and a release position in order to influence a free flow cross-section between the inlet port (18) and the outlet port (19), and further comprising a spring mechanism (20) designed to apply a presettable preloading force to the valve member (5) in order to determine a preferred position of the valve member (5) in the valve chamber (17), wherein the spring mechanism (20) is supported, with an end region thereof which is remote from the valve member (5), on a supporting means (45) which is slidably placed in a recess of the valve housing (4) or of a valve insert (9) which can be installed into the valve housing (4), and which can be located within an adjustment range in a freely selectable adjustment position relative to the valve housing (4), wherein the valve member (5) is slidably placed in a recess (48, 49) of the supporting means (45), **characterised by** the steps of: installation of the valve member (5) into the pressure chamber (17), insertion of the supporting means (45) and the spring mechanism (20) supported thereon into the valve housing (4), adjustment of a relative position of the supporting means (45) in respect to the valve housing (4) until, at a presettable test pressure and/or at a presettable test force acting on the valve member (5), a presettable volumetric fluid flow can pass through the pressure chamber (17) and/or until a presettable position of the valve member (5) relative to the valve housing (4) and/or the valve insert (9) is set, bonding of the supporting means (45) on the valve housing (4) and/or on the valve insert (9).

## Revendications

1. Procédé servant à fabriquer un module de soupape (1), qui comprend un carter de soupape (4), qui définit un espace de soupape (17) avec une liaison à communication fluidique avec un raccord d'entrée (18) et un raccord de sortie (19), et qui comprend un organe de soupape (5) logé de manière mobile dans l'espace de soupape (17), qui peut être réglé le long d'un axe de déplacement (21) entre une position de blocage et une position de déblocage pour influencer une section transversale d'écoulement libre entre le raccord d'entrée (18) et le raccord de sortie (19), et qui comprend un dispositif à ressort (20), qui est réalisé pour fournir une force de précontrainte pouvant être prédéfinie sur l'organe de soupape (5) pour définir une position de prédilection de l'organe de soupape (5) dans l'espace de soupape (17), dans lequel le dispositif à ressort (20) prend appui avec une zone d'extrémité opposée à l'organe de soupape (5) au niveau d'un moyen d'appui (45), qui est disposé de manière mobile par coulissement dans un évidement du carter de soupape (4) ou d'un insert de soupape (9) pouvant être installé dans le carter de soupape (4) et peut être fixé à l'intérieur d'une zone de réglage dans une position d'ajustement pouvant être choisie librement par rapport au carter de soupape (4), dans lequel l'organe de soupape (5) est logé de manière mobile par coulissement dans un évidement (48, 49) du moyen d'appui (45), **caractérisé par** les étapes : d'insertion de l'organe de soupape (5) dans l'espace de soupape (17), d'introduction par coulissement du moyen d'appui (45) et du dispositif à ressort (20), prenant appui sur ce dernier, dans le carter de soupape (4), de réglage d'une position relative du moyen d'appui (45) par rapport au carter de soupape (4), jusqu'à ce qu'un flux volumique de fluide pouvant être prédéfini puisse s'écouler à travers l'espace de soupape (17) en présence d'une pression de contrôle pouvant être prédéfinie et/ou en présence d'une force de contrôle pouvant être prédéfinie appliquées sur l'organe de soupape (5) et/ou une position pouvant être prédéfinie de l'organe de soupape (5) soit réglée par rapport au carter de soupape (4) et/ou à l'insert de soupape (9), de fixation par liaison de matière du moyen d'appui au niveau du carter de soupape (4) et/ou au niveau de l'insert de soupape (9).
